# EUROPÄISCHE PATENTSCHRIFT

(11) **EP 3 599 152 B1**
(45) Veröffentlichungstag und Bekanntmachung des Hinweises auf die Patenterteilung: **27.03.2024**
(21) Anmeldenummer: 19180337.8
(22) Anmeldetag: 14.06.2019
(51) Int. Cl.: B62M 3/00, B62M 6/55, B62M 11/14, B62M 11/18, F16H 3/44

(54) **BETRIEBSVERFAHREN FÜR EINE ANTRIEBSANORDNUNG, ANTRIEBSANORDNUNG UND FAHRZEUG**
DRIVE ASSEMBLY; VEHICLE AND OPERATING METHOD FOR A DRIVE ASSEMBLY
PROCÉDÉ DE FONCTIONNEMENT POUR UN DISPOSITIF D'ENTRAÎNEMENT, DISPOSITIF D'ENTRAÎNEMENT ET VÉHICULE

(30) Priorität: 25.07.2018 DE 102018212433
(43) Veröffentlichungstag der Anmeldung: 29.01.2020
(73) Patentinhaber: Robert Bosch GmbH, 70442 Stuttgart (DE)
(72) Erfinder: Kimmich, Peter, 71144 Steinenbronn (DE); Hinterkausen, Markus, 71696 Moeglingen (DE)

(56) Entgegenhaltungen:
- EP-A1- 2 924 319
- WO-A1-2011/090958
- DE-A1- 2 619 500
- DE-A1-102016 207 035
- DE-B3- 10 257 973

## Beschreibung

### Stand der Technik

Die vorliegende Erfindung betrifft ein Betriebsverfahren für eine Antriebsanordnung, eine Antriebsanordnung als solche sowie ein Fahrzeug. Die vorliegende Erfindung betrifft insbesondere ein Betriebsverfahren für eine Antriebsanordnung eines mit Muskelkraft und/oder - gegebenenfalls zusätzlich - mit Motorkraft antreibbaren Fahrzeuges, eines Elektrofahrrades, eBikes, Pedelecs oder dergleichen, eine entsprechende Antriebsanordnung als solche sowie ein mit Muskelkraft und/oder - gegebenenfalls zusätzlich - mit Motorkraft antreibbares Fahrzeug, ein Elektrofahrrad, eBike, Pedelec oder dergleichen.

Oft werden Fahrräder, Elektrofahrräder und dergleichen am angetriebenen Hinterrad mit einer Ketten- oder Nabenschaltung ausgebildet. Alternativ dazu können auch Tretlagerantriebe mit einem integrierten Schaltgetriebe vorgesehen werden. Beispiele aus dem Stand der Technik finden sich zum Beispiel in DE102016207035A1, EP2924319A1, WO2011/090958A1, DE10257973 B3 und DE2619500 A1, darunter EP 2 924 319 A1 offenbart die Merkmale der Oberbegriffe der unabhängigen Ansprüchen 1 und 7.

Problematisch sind bei bekannten Antriebsanordnungen mit am Tretlager angeordneten Schaltgetrieben und bei deren Betrieb die gesteigerte Größe der verbauten Strukturen und ihr mangelnder Wirkungsgrad. Zwar sind Planetenschaltgetriebe bekannt, welche eine Verbesserung bringen sollen, aber auch dort sind ein weiter vereinfachter Aufbau und eine Steigerung des Benutzungskomforts wünschenswert, insbesondere in Bezug auf ruckartige Übergänge auf Grund der noch bestehenden Momentenfluss- und Leistungsflussumkehr bei der Verwendung von Direktgängen.

### Offenbarung der Erfindung

Das erfindungsgemäße Betriebsverfahren für eine Antriebsanordnung mit den Merkmalen des Anspruchs 1 weist demgegenüber den Vorteil auf, dass ein Planetenschaltgetriebe ohne Momentenfluss- und Leistungsflussumkehr und ohne den Einsatz von Direktgängen betrieben werden kann. Dies wird erfindungsgemäß mit den Merkmalen des unabhängigen Anspruches 1. Dabei wird ein Betriebsverfahren für eine Antriebsanordnung für ein mit Muskelkraft und/oder - insbesondere zusätzlich - mit Motorkraft antreibbares Fahrzeug, ein Elektrofahrrad, eBike oder Pedelec geschaffen, wobei die Antriebsanordnung (a) mit einer um eine Drehachse drehbaren Kurbelwelle zum Aufnehmen eines ersten und insbesondere mit Muskelkraft erzeugten Drehmomentes und (b) mit einer Übertragungseinrichtung ausgebildet ist, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Planetengetriebes zu einer variablen Übersetzung eingerichtet ist. Bei dem erfindungsgemäßen Betriebsverfahren wird eine jeweilige Übersetzung des Planetengetriebes über eine Gangwahl oder einen Gangwechsel und durch gesteuertes Feststellen und/oder Freigeben jeweiliger Sonnenräder und/oder den Sonnenrädern entsprechender Planetenstufen eingestellt. Für jede Übersetzung und für jeden Gang der Antriebsanordnung ist oder wird immer mindestens eines der Sonnenräder und/oder immer mindestens eine der den Sonnenrädern entsprechenden Planetenstufen festgestellt. Die Verwendung eines Planetengetriebes als formschlüssiges Getriebe an sich erzielt einen besonders hohen Wirkungsgrad beim Übertragen des Drehmoments in Abtriebsrichtung. Dadurch, dass bei jedem oder für jeden Gang und/oder für jede Übersetzung immer mindestens eines der Sonnenräder und/oder immer mindestens eine der den Sonnenrädern entsprechenden Planetenstufen festgestellt ist oder wird, ergibt sich ein Betrieb (i) ohne Leistungs- und Momentenflussumkehr, (ii) ohne Notwendigkeit und also mit Entfall von etwaigen Direktgängen, (iii) mit vereinfachter Momentensensierung und (iv) mit vereinfachtem Aufbau für ein Rückwärtspedalieren.

Das erfindungsgemäße Verfahren kann auch mit herkömmlichen Tretlagerantrieben auf der Grundlage von Planetengetrieben vorteilsbringend ausgeführt werden und liefert dort ebenfalls einen ruckfreien Betrieb ohne Momentenfluss- und Leistungsflussumkehr und mit der Möglichkeit einer vergleichsweise verfälschungsfreien Momentensensierung.

Bei dem erfindungsgemäßen Betriebsverfahren erfolgt ein gesteuertes Feststellen und Freigeben eines jeweiligen Sonnenrads und/oder einer dem jeweiligen Sonnenrad entsprechenden Planetenstufe über ein Feststellen bzw. Freigeben eines mit einem jeweiligen Sonnenrad drehfest gekoppelten Mitnehmerelements. Durch diese Maßnahmen ergibt sich ein vergleichsweise hoher Wirkungsgrad bei der Leistung- und Drehmomentübertragung.

Dabei ist es insbesondere denkbar, dass gemäß einem anderen vorteilhaften Ausführungsbeispiel des erfindungsgemäßen Betriebsverfahrens ein jeweiliges Mitnehmerelement als ein oder mit einem Reibelement über einen steuerbaren Reibschluss mit einem Bremselement zum Feststellen steuerbar abgebremst und arretiert und zum Freigeben von einem Reibschluss gelöst wird.

Alternativ oder zusätzlich kann ein jeweiliges Mitnehmerelement - insbesondere als Schaltfinger und/oder über einen mechanisch schaltenden Freilauf - über einen Stellantrieb, z.B. in Form einer Schaltkulisse, zum Feststellen steuerbar blockiert und zum Freigeben von einer Blockade gelöst werden.

Ein besonders hohes Maß an Vereinfachung in verfahrenstechnischer Hinsicht und in Folge davon auch in konstruktiver Hinsicht ergibt sich erfindungsgemäß dadurch, dass genau ein vorbestimmtes Sonnenrad und/oder die diesem Sonnenrad entsprechende Planetenstufe - insbesondere unter Zwischenschaltung eines mechanisch selbstschaltenden Freilaufs - permanent festgestellt ist oder wird.

Dabei ist es insbesondere denkbar, dass das permanente Feststellen des genau einen vorbestimmten Sonnenrads und/oder der diesem Sonnenrad entsprechenden Planetenstufe - insbesondere unter Zwischenschaltung eines mechanisch selbstschaltenden Freilaufs - durch permanentes Feststellen des jeweiligen Mitnehmerelements erfolgt.

Eine verfahrenstechnisch und in struktureller Hinsicht besonders einfache Vorgehensweise ergibt sich dabei, wenn das permanente Feststellen des jeweiligen Mitnehmerelements durch mechanisches Fixieren an einem äußeren und nicht mitdrehbaren Gehäuse erfolgt, z.B. an einem Tretlagergehäuse.

Gemäß einem weiteren Aspekt der vorliegenden Erfindung wird auch eine Antriebsanordnung für ein mit Muskelkraft und/oder - insbesondere zusätzlich - mit Motorkraft antreibbares Fahrzeug, ein Elektrofahrrad, eBike oder Pedelec geschaffen, welche zur Verwendung in einem erfindungsgemäßen Betriebsverfahren eingerichtet ist.

Die Antriebsanordnung ist (a) mit einer um eine Drehachse drehbaren Kurbelwelle zum Aufnehmen eines ersten und insbesondere mit Muskelkraft erzeugten Drehmomentes und (b) mit einer Übertragungseinrichtung ausgebildet, welche zum Übertragen des ersten Drehmomentes von der Kurbelwelle an ein mit einem Antriebsrad des Fahrzeuges koppelbares Abtriebselement und mittels eines - insbesondere automatisch - schaltbaren mehrstufigen Planetengetriebes zu einer variablen Übersetzung eingerichtet ist.

Die Übersetzung des Planetengetriebes ist über einen Gangwechsel und durch gesteuertes Verbinden und/oder Freigeben jeweiliger Sonnenräder und/oder jeweiligen Sonnenrädern entsprechender Planetenstufen über ein mit dem jeweiligen Sonnenrad drehfest gekoppeltes Mitnehmerelement einstellbar.

Ein jeweiliges Mitnehmerelement kann insbesondere als ein oder mit einem Reibelement und über einen steuerbaren Reibschluss mit einem Bremselement zum Feststellen steuerbar abbremsbar und arretierbar und zum Freigeben von einem Reibschluss lösbar ausgebildet sein.

Alternativ oder zusätzlich ist es denkbar, dass ein jeweiliges Mitnehmerelement über einen Stellantrieb - z.B. in Form einer Schaltkulisse - zum Feststellen steuerbar blockierbar und zum Freigeben von einer Blockade lösbar ausgebildet ist, insbesondere als ein oder mit einem Schaltfinger und/oder über einen dazwischen ausgebildeten mechanisch schaltenden Freilauf.

Bei der erfindungsgemäßen Antriebsanordnung ist genau ein vorbestimmtes Sonnenrad und/oder eine oder die diesem Sonnenrad entsprechende Planetenstufe permanent festgestellt.

Dies kann insbesondere unter Zwischenschaltung eines mechanisch selbstschaltenden Freilaufs erfolgen und/oder durch mechanisches Fixieren - vorzugsweise eines entsprechenden Mitnehmerelements - an einem äußeren und nicht mitdrehbaren Gehäuse, z.B. einem Tretlagergehäuse.

Bei einer anderen vorteilhaften Ausgestaltungsform der erfindungsgemäßen Antriebsanordnung weist die Übertragungseinrichtung zwei über ein gemeinsames Hohlrad gekoppelte oder koppelbare Planetengetriebe auf.

Dabei ist es von besonderem Vorteil, wenn ein Planetenträger des einen und insbesondere abtriebsseitigen Planetengetriebes über einen aktiv schaltbaren Freilauf oder eine aktiv schaltbare Kupplung mit dem gemeinsamen Hohlrad steuerbar koppelbar ausgebildet ist.

Alternativ oder zusätzlich kann es gemäß einem anderen Ausführungsbeispiel der erfindungsgemäßen Antriebsanordnung vorgesehen sein, dass die Übertragungseinrichtung zwei über ein gemeinsames Hohlrad gekoppelte Planetengetriebe aufweist und ein Planetenträger des einen und insbesondere abtriebsseitigen Planetengetriebes über einen aktiv schaltbaren Freilauf oder eine aktiv schaltbare Kupplung mit einem Sonnenrad des Planetengetriebes steuerbar koppelbar ausgebildet ist.

Insbesondere kann dies über eine steuerbare Kopplung zwischen Planetenträgerwelle und Sonnenradwelle realisiert sein oder werden.

Die vorliegende Erfindung betrifft des Weiteren ein mit Muskelkraft und/oder - insbesondere zusätzlich - mit Motorkraft antreibbares Fahrzeug und insbesondere ein Elektrofahrrad, eBike, Pedelec oder dergleichen. Das erfindungsgemäße Fahrzeug weist mindestens ein Rad auf sowie eine erfindungsgemäß ausgebildete Antriebsanordnung, mit welcher das mindestens eine Rad des Fahrzeuges antreibbar ist.

### Kurzbeschreibung der Figuren

Unter Bezugnahme auf die beigefügten Figuren werden Ausführungsformen der Erfindung im Detail beschrieben.
- Figur 1: ist eine schematische Darstellung eines Beispiels eines Fahrzeuges nach Art eines Elektrofahrrades, bei welchem eine erste Ausführungsform der Erfindung realisiert ist;
- Figuren 2A und 2B: zeigen jeweils in schematischer Draufsicht Ausführungsformen der erfindungsgemäßen Antriebsanordnung mit Kurbeltrieb und mit elektrischem Antrieb, welche im Zusammenhang mit dem erfindungsgemäßen Betriebsverfahren verwendet und betrieben werden können und welche auf der Verwendung von Schaltfingern als Mitnehmerelementen basieren;
- Figuren 3A und 3B: zeigen jeweils in schematischer Draufsicht Ausführungsformen der erfindungsgemäßen Antriebsanordnung mit Kurbeltrieb und mit elektrischem Antrieb, welche im Zusammenhang mit dem erfindungsgemäßen Betriebsverfahren verwendet und betrieben werden können und welche auf der Verwendung von Reibelementen als Mitnehmerelementen basieren;
- Figur 4: zeigt den schematisch Leistungsfluss und/oder den Momentenfluss bei der in Figur 2A gezeigten Ausführungsform der erfindungsgemäßen Antriebsanordnung;
- Figuren 5 und 6: zeigen jeweils in schematischer Draufsicht Abwandlungen der in Figur 2A gezeigten Ausführungsform der erfindungsgemäßen Antriebsanordnung.

### Bevorzugte Ausführungsformen der Erfindung

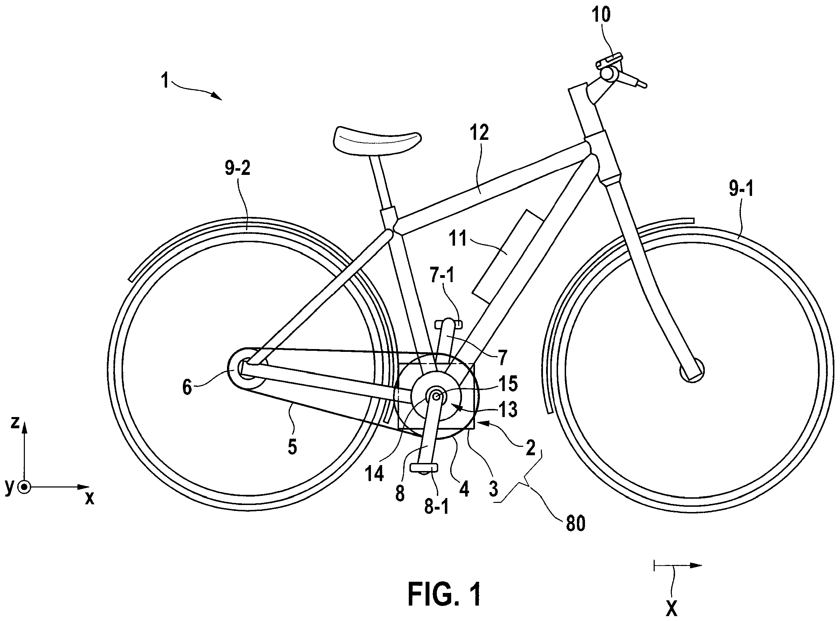

Nachfolgend werden unter Bezugnahme auf die Figuren 1 bis 6 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weitere Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist ein Ritzel 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem gegebenenfalls ausgebildeten elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13 oder Tretlager, welches ein Kurbelgehäuse 14 und eine Kurbelwelle 15 aufweist.

Die erfindungsgemäße Antriebsanordnung 80 des erfindungsgemäßen Fahrzeuges 1 aus Figur 1 weist den Kurbeltrieb 2 und den elektrischen Antrieb 3 auf, wobei die von diesen erzeugbaren Drehmomente über eine entsprechende und in Figur 1 nicht dargestellte Übertragungseinrichtung 20 mit einem schaltbaren mehrstufigen Planetengetriebe 21 aufnehmbar und an das Kettenblatt als Abtriebselement 4 übertragbar sind.

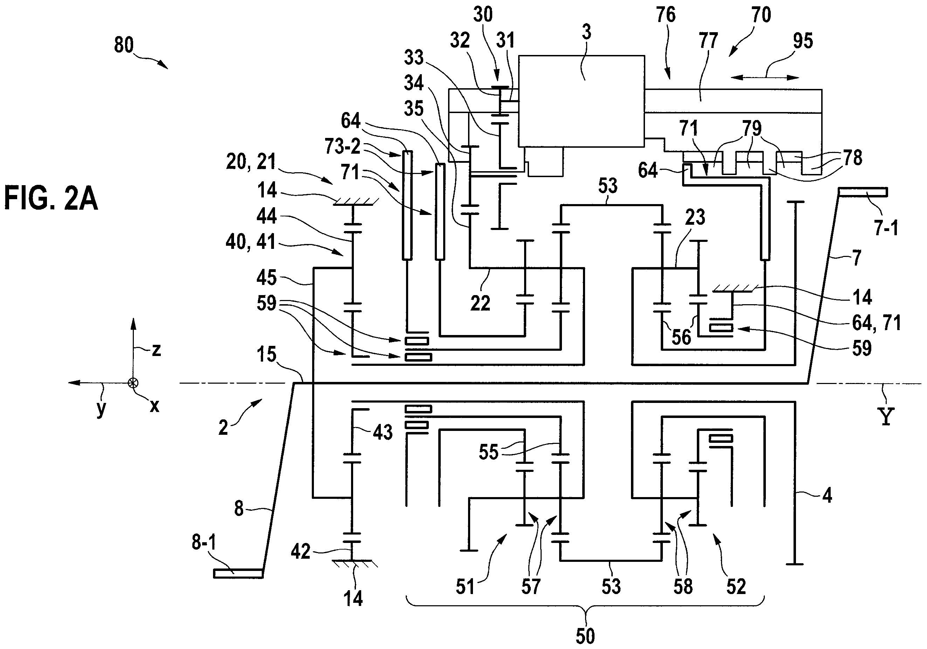

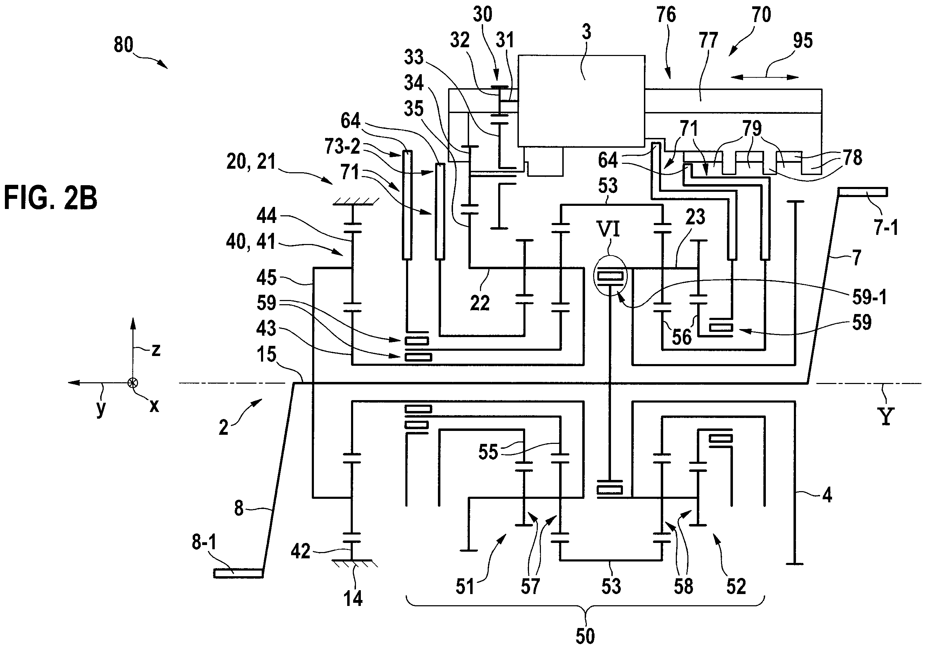

Die Figuren 2A und 2B zeigen schematische Draufsichten auf Ausführungsformen der erfindungsgemäßen Antriebsordnung 80 mit einem elektrischen Antrieb 3 und einem Kurbeltrieb 2, und zwar auf der Grundlage von Mitnehmerelementen 64, die als Schaltfinger 71 ausgebildet sind und mit einer Schaltkulisse 76 als steuerbarem Stellantrieb 70 zusammenwirken.

Zur Übertragung von Drehmomenten vom Kurbeltrieb 2 und vom elektrischen Antrieb 3 ist eine Übertragungseinrichtung 20 ausgebildet, welche ein mit einem koaxial zu der durch die Kurbelwelle 15 definierten Drehachse Y angeordnetes Planetengetriebe 21 aufweist.

Das Planetengetriebe 21 besteht einerseits aus einer Hochtreiberstufe 40 mit einem Planetengetriebe 41 der Hochtreiberstufe 40 und andererseits aus einem mehrstufigen Schaltgetriebe 50 mit einem ersten und hier zweistufigen Planetengetriebe 51, nämlich eingangsseitig oder antriebsseitig, der Hochtreiberstufe 40 zugewandt und vom Abtriebselement 4 abgewandt, und einem zweiten und hier zweistufigen Planetengetriebe 52, nämlich ausgangsseitig oder abtriebsseitig, dem Abtriebselement 4 zugewandt und der Hochtreiberstufe 40 abgewandt.

Die ersten und zweiten Planetengetriebe 51 und 52 des Schaltgetriebes 50 weisen entsprechende erste und zweite Sonnenräder 55 bzw. 56 und den Sonnenrädern 55, 56 zugeordnete Planetenräder 57 bzw. 58 auf, die an Planetenstegen 22, 23 gelagert und über ein gemeinsames Hohlrad 53 gekoppelt sind.

Über lösbare Verbindungen wird die Verbindung der Sonnenräder 55, 56 mit dem Gehäuse 14 der Antriebsordnung 80 in gesteuerter Art und Weise bewirkt. Dies geschieht bei den Ausführungsformen gemäß den Figuren 2A und 2B über das gesteuert schaltbare Sperren oder Freigeben der mit den Sonnenrädern 55, 56 drehfest verbundenen und umlaufenden Mitnehmerelemente 64 an den distalen Enden 73-2 der Schaltfinger 71 mit den Anschlagselementen 78 am Kulissenkörper 77 der Schaltkulisse 76, die im Zusammenhang mit der Verstelleinheit 70, die auch als Stellantrieb 70 bezeichnet werden kann, von der Drehachse Y beabstandet aber achsenparallel zu dieser in der Pfeilrichtung 95 verschiebbar ist.

Jedes der Sonnenräder 55 des ersten Planetengetriebes 51 und jedes der Sonnenräder 56 des zweiten Planetengetriebes 52 der Getriebeschaltstufen 50 weist einen eigenen und mit dem jeweiligen Sonnenrad 55, 56 drehfest gekoppelten Schaltfinger 71 auf. Die Mitnehmerelemente 64, die in den Fällen der Figuren 2,A, 2B, und 4 bis 6 auch als Klauen oder als Mitnehmerklauen bezeichnet werden können und sich am jeweiligen distalen Ende 73-2 der Schaltfinger 71 befinden, sind in Bezug auf die Lücken 79 und die Anschlagselemente 78, die auch als Widerlagerelemente oder Kulissenklauen bezeichnet werden können, so abgestimmt angeordnet, dass durch Verschieben der Schaltkulisse 76 entlang der Pfeilrichtung 95 ein getrenntes oder kombiniertes Freigeben oder Sperren der einzelnen Sonnenräder 55 und 56 der ersten und zweiten Planetengetriebe 51, 52 der Getriebeschaltstufen 50 des Schaltgetriebes erreicht werden kann.

Ferner ist an verschiedenen Stellen des Schaltgetriebes 50 jeweils ein Freilauf 59 bzw. 59-1 ausgebildet, wobei der Freilauf 59-1 im Zusammenhang mit einem Direktgang steht.

Die Hochtreiberstufe 40 mit dem Planetengetriebe 41 zum Einbringen des mit Muskelkraft erzeugten Drehmomentes weist ein Hohlrad 42, ein innenlaufendes Sonnenrad 43 sowie einen dazwischen laufenden Planetensteg 45 mit Planeten 44 der Hochtreiberstufe 40 auf.

Andererseits wird das vom elektrischen Antrieb 3 erzeugte Motordrehmoment durch die Motorwelle 31 an das Motorreduziergetriebe 30 abgegeben und letztlich an ein Stirnrad 35 als Abtriebselement des Motorreduziergetriebes 30 übertragen, welches materiell verbunden ist mit dem eingangsseitigen Planetensteg 22 des Schaltgetriebes 50.

In den in den Figuren 2A und 2B dargestellten Fällen besteht das Motorreduziergetriebe 30 aus einer Anordnung mehrerer Stirnräder 32 bis 34, die das Motordrehmoment abtriebsseitig auf das mit dem eingangsseitigen Planetensteg 22 gekoppelte Stirnrad 35 übertragen.

Bei der Ausführungsform gemäß Figur 2A ist genau ein Mitnehmerelement 64, nämlich im zweiten Planetengetriebe 52 auf der Ausgangsseite oder Abtriebsseite, durch mechanische Fixierung mit dem Gehäuse 14 verbunden und dadurch permanent festgestellt. Dies bedeutet, dass in diesem Fall das erfindungsgemäße Verfahren allein schon durch mechanisches Feststellen dieses vorbestimmten Mitnehmerelements 64 realisiert ist oder wird.

Bei der Ausführungsform gemäß Figur 2B sind dagegen sämtliche Mitnehmerelemente 64 als Schaltfinger 71 oder mit Schaltfinger 71 ausgebildet und das erfindungsgemäße Verfahren muss durch entsprechende Ansteuerung der Schaltkulisse 76 und insbesondere der gesteuerten Wahl und Stellung des Kulissenkörpers 77 mit den Anschlagselementen 78 und den Lücken 79 bewirkt werden.

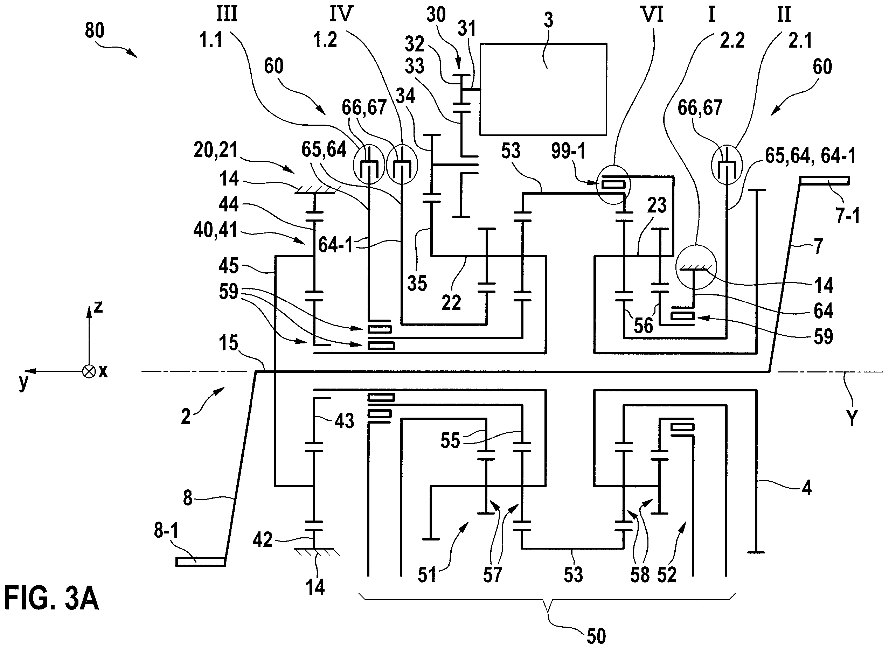

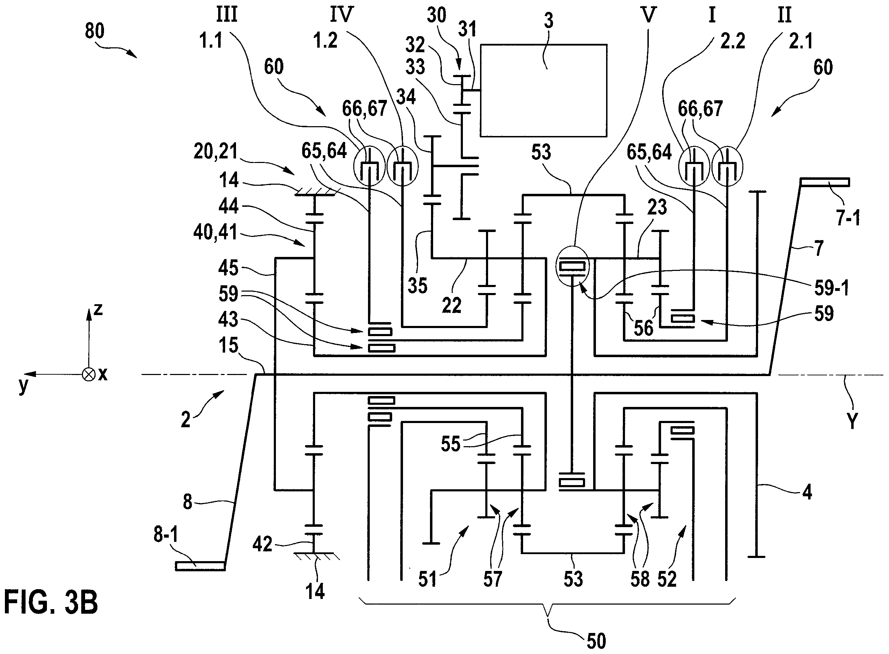

Die Figuren 3A und 3B zeigen schematische Draufsichten auf Ausführungsformen der erfindungsgemäßen Antriebsordnung 80 mit einem elektrischen Antrieb 3 und einem Kurbeltrieb 2, und zwar auf der Grundlage der Verwendung von Bremseinheiten 60 mit Reibelementen 64-1 als Mitnehmerelemente 64.

Zur Übertragung von Drehmomenten vom Kurbeltrieb 2 und vom elektrischen Antrieb 3 ist eine Übertragungseinrichtung 20 ausgebildet, welche ein mit einem koaxial zu der durch die Kurbelwelle 15 definierten Drehachse Y angeordnetes Planetengetriebe 21 aufweist.

Das Planetengetriebe 21 besteht wieder einerseits aus einer Hochtreiberstufe 40 mit einem Planetengetriebe 41 der Hochtreiberstufe 40 und andererseits ebenfalls wieder aus einem mehrstufigen Schaltgetriebe 50 mit einem ersten und hier zweistufigen Planetengetriebe 51, nämlich eingangsseitig, der Hochtreiberstufe 40 zugewandt und vom Abtriebselement 4 abgewandt, und einem zweiten und hier zweistufigen Planetengetriebe 52, nämlich ausgangsseitig, dem Abtriebselement 4 zugewandt und der Hochtreiberstufe 40 abgewandt.

Die ersten und zweiten Planetengetriebe 51 und 52 des Schaltgetriebes 50 weisen entsprechende erste und zweite Sonnenräder 55 bzw. 56 und den Sonnenrädern 55, 56 zugeordnete Planetenräder 57 bzw. 58 auf, die an Planetenstegen 22, 23 gelagert und über ein gemeinsames Hohlrad 53 gekoppelt sind.

Über lösbare Verbindungen wird die Verbindung der Sonnenräder 55, 56 mit dem Gehäuse 14 der Antriebsordnung 80 in gesteuerter oder steuerbarer Art und Weise bewirkt. Dies geschieht bei der Ausführungsform gemäß Figur 2 über das gesteuert schaltbare Sperren oder Freigeben der mit den Sonnenrädern 55, 56 drehfest verbundenen und umlaufenden Mitnehmerelemente 64.

Allgemein ist ein jeweiliges Mitnehmerelement 64 erfindungsgemäß dazu ausgebildet mit einem zugeordneten Bremselement steuerbar reibschlüssig in Wechselwirkung zu treten und steuerbar abbremsbar und arretierbar und freigebbar zu sein.

Bei den in den Figuren 3A und 3B gezeigten Antriebsanordnungen 80 weist ein jeweiliges Mitnehmerelement 64 eine Bremsscheibe 65 auf oder ist insgesamt als eine Bremsscheibe 65 ausgebildet.

Als Bremselement 66 in Zuordnung zu einem jeweiligen Mitnehmerelement 64 ist bei der in Figur 3A gezeigten Antriebsanordnung 80 eine steuerbar betätigbare Bremszange 67 ausgebildet.

Ein jeweiliges Mitnehmerelement 64 - hier in Form einer oder mit einer Bremsscheibe 65 - und eine jeweiliges Bremselement 66 - hier in Form einer oder mit einer Bremszange 67 - sind von der Drehachse Y radial beabstandet.

Jedes der Sonnenräder 55 des ersten Planetengetriebes 51 und jedes der Sonnenräder 56 des zweiten Planetengetriebes 52 der Getriebeschaltstufen 50 weist eine eigene und mit dem jeweiligen Sonnenrad 55, 56 drehfest gekoppelte oder koppelbare Bremsscheibe 65 als Mitnehmerelement 64 auf. Die Mitnehmerelemente 64 sind in Bezug auf die als Bremszangen 67 ausgebildeten Bremselemente 66, so abgestimmt angeordnet, dass durch gesteuertes Betätigen der Bremselemente und damit durch gesteuerten Reibschluss ein getrenntes oder kombiniertes Freigeben oder Sperren der einzelnen Sonnenräder 55 und 56 der ersten und zweiten Planetengetriebe 51, 52 der Getriebeschaltstufen 50 des Schaltgetriebes erreicht werden kann.

Ferner ist an verschiedenen Stellen des Schaltgetriebes 50 jeweils ein Freilauf 59 bzw. 59-1 ausgebildet, wobei der Freilauf 59-1 im Zusammenhang mit einem Direktgang steht.

Die Hochtreiberstufe 40 mit dem Planetengetriebe 41 zum Einbringen des mit Muskelkraft erzeugten Drehmomentes weist ein Hohlrad 42, ein innenlaufendes Sonnenrad 43 sowie einen dazwischen laufenden Planetensteg 45 mit Planeten 44 der Hochtreiberstufe 40 auf.

Andererseits wird das vom elektrischen Antrieb 3 erzeugte Motordrehmoment durch die Motorwelle 31 an das Motorreduziergetriebe 30 abgegeben und letztlich an ein Stirnrad 35 als Abtriebselement des Motorreduziergetriebes 30 übertragen, welches materiell verbunden ist mit dem eingangsseitigen Planetensteg 22 des Schaltgetriebes 50.

Bei den in den Figuren 3A und 3B dargestellten Fällen besteht das Motorreduziergetriebe 30 aus einer Anordnung mehrerer Stirnräder 32 bis 34, die das Motordrehmoment abtriebsseitig auf das mit dem eingangsseitigen Planetensteg 22 gekoppelte Stirnrad 35 übertragen.

Bei der Ausführungsform gemäß Figur 3A ist genau ein Mitnehmerelement 64, nämlich im zweiten Planetengetriebe 52 auf der Ausgangsseite oder Abtriebsseite durch mechanische Fixierung mit dem Gehäuse 14 permanent festgestellt. Dies bedeutet, dass in diesem Fall das erfindungsgemäße Verfahren allein schon durch mechanisches Feststellen dieses vorbestimmten Mitnehmerelements 64 realisiert ist oder wird.

Zusätzlich kann bei der Ausführungsform gemäß Figur 3A zwischen dem Planetensteg 23 des zweiten Planetengetriebes 52 auf der Abtriebsseite und dem gemeinsamen Hohlrad 53 für die beiden Planetengetriebe 51 und 52 des Schaltgetriebes 50 ein aktiv schaltender oder schaltbarer Freilauf 99-1 vorgesehen sein.

Bei der Ausführungsform gemäß Figur 3B sind sämtliche Mitnehmerelemente 64 als Reibelemente 64-1 ausgebildet und das erfindungsgemäße Verfahren muss durch entsprechende Ansteuerung der Bremselemente 66 und insbesondere der Bremszangen 67 bewirkt werden.

Diese und weitere Merkmale und Eigenschaften der vorliegenden Erfindung werden an Hand der folgenden Darlegungen weiter erläutert:
Die Erfindung betrifft insbesondere Fahrzeuge 1 wie Elektrofahrräder, Pedelecs, eBikes und dergleichen, insbesondere mit Mittelmotorantrieb und mit einer Fahrradschaltung zur Anpassung der begrenzten Antriebskraft des Fahrers an die unterschiedlichen Fahrwiderstände.

Eine Zielsetzung der Erfindung ist die Schaffung eines verbesserten Betriebsverfahrens für eine Fahrradschaltung, welche z.B. nach dem Grundprinzip einer Nabenschaltung aufgebaut ist und welche in eine Antriebsanordnung 80 am Tretlager 13 z.B. eines Pedelecs oder dergleichen zu integrieren ist.

Dabei soll eine besonders kompakte Konfiguration einer Antriebsanordnung 80 mit hohem Wirkungsgrad erzielt werden, die lastschaltfähig ist, ein Schalten ohne Zugkraftunterbrechung erlaubt und dabei ohne oder mit einem verringerten Maß an Leerwegen auskommt und einen besonders ruckarmen oder gar ruckfreien Schaltübergang schafft. Zusätzlich soll erfindungsgemäß erreicht werden, dass sich ein Betrieb ohne Momentenfluss- und Leistungsflussumkehr einstellt, wobei insbesondere das Erfordernis eines Direktgangs entfällt, die Anzahl zu verbauender Komponenten verringert wird und/oder die Erfassung eines Drehmoments vergleichsweise verfälschungsfrei erfolgen kann.

Die Erfindung betrifft also insbesondere Elektrofahrzeuge, Elektrofahrräder, Pedelecs, eBikes mit Mittelmotorantrieb und einer Fahrradschaltung zur Anpassung der begrenzten Antriebskraft des Fahrers an die unterschiedlichen Fahrwiderstände.

Ausgehend von in Tretlagerantrieben 80 integrierten schaltbaren Planetenschaltgetrieben 50 in oder mit koaxialer Anordnung zur Tretkurbelwelle 15 und zum Abtriebselement 4, z.B. einem Kettenblatt, soll ein Betriebsverfahren entwickelt werden, welches eine lastschaltfähiges, zugkraftunterbrechungsfreies und effizientes automatische schalten - insbesondere im Sinne einer Automatikfahrradschaltung - realisiert.

Dabei sollen Nachteile einer Momentenflussumkehr und/oder Leistungsflussumkehr, welche bei einem herkömmlichen Schaltvorgang aus einem oder in einen Direktgang in den nächsten Gang auftreten können, vermieden werden.

Vorgestellt werden erfindungsgemäß also ein in einen Tretlagerantrieb, aufgefasst als Antriebsanordnung 80 im Sinne der vorliegenden Erfindung, integriertes, automatisch und unter Last schaltbares Planetenschaltgetriebe 50 und ein entsprechendes Betriebsverfahren vorgestellt, durch welche das Schalten und damit die Aufgabe einer Mehrgangfahrradschaltung derart vereinfacht werden, dass keine Momentenflussumkehr und/oder Leistungsflussumkehr beim Schaltvorgang auftreten. Dabei soll zusätzlich eine zu Grunde liegende elektromechanische Schaltaktorik vereinfacht werden können, z.B. durch Obsoletheit von Direktgängen und/oder dann überzähliger Aktuatoren.

Die Erfindung löst die gestellte Aufgabe insbesondere durch ein entsprechendes Betriebsverfahren, durch welches strukturell das Entfernen von Direktgängen bei zu Grunde liegenden Mehrgangplanetenschaltgetrieben und insbesondere bei 7-Gang-Planetenschaltgetrieben, welche eine Leistungsflussumkehr beim Schaltvorgang in einen Direktgang oder aus einem Direktgang heraus in den nächsten Gang zeigen, möglich wird.

Durch das erfindungsgemäße Vorgehen kann ein mit einem Sonnenrad koppelbares oder gekoppeltes Mitnehmerelement, zum Beispiel ein Schaltfinger oder ein Reibelement, dauerhaft drehfest mit einem übergeordneten Gehäuse verbunden werden, wodurch das entsprechende Sonnenrad ebenfalls dauerhaft oder im Wesentlichen dauerhaft festgestellt wird.

Ein aktives Blockieren dieses Mitnehmerelements für den Schaltvorgang ist nicht mehr erforderlich, wodurch ein Aktuator für dieses Mitnehmerelement entfallen kann. Dies betrifft insbesondere eine Schaltmechanik mit einer Schaltkulisse, wodurch sich eine strukturelle Vereinfachung ergibt. Ein Blockieren oder Freigeben von Schaltfingern 71 als Mitnehmerelemente 64, welche mit den Sonnenrädern des Planetenschaltgetriebes 50 verbundenen sind, das Variieren der Übersetzung bzw. Schalten des Planetenschaltgetriebes 50.

Ein weiterer Vorteil der Entfernung des Direktgangs ist die Möglichkeit einer vereinfachten Drehmomentensensierung für das Drehmoment des Fahrers, da ohne eine Leistungsflussumkehr das Drehmomentsignal vom Fahrer ausgehend nicht durch ein zusätzlich detektiertes Drehmomentsignal vom Motor 3 ausgehend verfälscht wird.

In der Regel wird bei einem eBike/Pedelec mit Mittelmotor über das Drehmomentsignal vom Fahrer ausgehend die Unterstützungsleistung des Motors geregelt.

Darüber hinaus ist ohne eine Leistungsflussumkehr die Realisierung des Rückwärtspedalierens in einfacher Weise über einen Freilauf am Eingang der gesamten Getriebeeinheit oder am Eingang der Schaltgetriebeeinheit möglich, wodurch die Antriebseinheit kompakter werden kann.

Durch das Entfernen des Direktgangs kann zum Beispiel zunächst ein lastschaltbares 6-Gang-Planetenschaltgetriebe realisiert werden. Ein weiterer Gang kann durch das Anbringen eines aktiv geschalteten Freilaufs 71-1, 79-2 oder einer Kupplung, wodurch zwei Wellen des Stufenplanetengetriebes miteinander verbunden werden können, hinzugefügt werden. Es entsteht so ein 7-Gang-Planetenschaltgetriebe ohne Leistungsflussumkehr durch einen Schaltvorgang, wodurch die oben genannten Vorteile weiter Bestand haben.

Die Figuren 2B und 3B zeigen den Aufbau eines Pedelec- oder eBike-Tretlagerantriebs mit einem integrierten lastschaltbaren 6-Gang-Planetenschaltgetriebe unter der Verwendung von sogenannten Direktgängen.

In Figur 2A ist ein Konzept für eine erfindungsgemäße Antriebsanordnung 80 mit drei als Schaltfinger 71 aufgebauten Mitnehmerelementen 64 und einer axial verschiebbaren Schaltkulisse 76 dargestellt.

Durch die seitlich an den Sonnenrädern 55 und 56 des Planetenschaltgetriebes 50 drehfest angebrachten Schaltfinger 71, welche mit den Sonnenrädern 55, 56 umlaufen, können die Sonnenräder 55, 56 einzeln oder in Kombination mittels der Schaltkulisse 76 in ihrer Drehbewegung blockiert bzw. drehfest mit dem Gehäuse 14 verbunden und wieder freigegeben werden. Durch das Blockieren und Freigeben der Sonnenräder 55, 56 werden die verschiedenen Übersetzungen bzw. Gänge des Planetenschaltgetriebes 50 eingestellt bzw. geschaltet.

Dabei ist ein Sonnenrad 56 eines abtriebsseitigen Stufenplanetengetriebes 52 über einen mechanisch selbsttätigen bzw. selbstschaltenden Überholfreilauf 59 dauerhaft mit dem Gehäuse 14 verbunden. Eine Blockade oder Freigabe dieses Sonnenrads 56 erfolgt, indem bei einem Gangwechsel das Sonnenrad 56 eine Drehrichtungsumkehr erfährt und dabei gleichzeitig der Freilauf 59 das Sonnenrad 56 entweder drehfest mit dem Gehäuse 14 verbindet oder drehbar vom Gehäuse 14 entkoppelt.

Figur 2A zeigt, dass einer der drei Schaltfinger 71 über einen selbstschaltenden Überholfreilauf 59 mit dem zugehörigen Sonnenrad 56 verbunden ist. Damit ist es möglich, nach einer Blockade dieses Schaltfingers 71 durch die Schaltkulisse 76 bei einem Gangwechsel ein Wegdrehen dieses Schaltfingers 71 von der Schaltkulisse 76 zu verhindern. Der Schaltfinger 71 kann mittels der Schaltkulisse 76 in der Blockadeposition gehalten und gleichzeitig das Sonnenrad 56 für einen Gangwechsel wieder freigegeben werden. Dies geschieht, indem bei einem Gangwechsel das Sonnenrad 56 eine Drehrichtungsumkehr erfährt und dabei gleichzeitig der Freilauf 59 den Schaltfinger 71 von dem zugehörigen Sonnenrad 56 entkoppelt. Durch das Verhindern des Wegdrehens des Schaltfingers 71 von der Schaltkulisse 76 wird bei erneuter Blockade des Schaltfingers 71 respektive Sonnenrad 56 ein Leerweg der Tretkurbeln 8 ohne Leistungsübertragung durch die Umlaufzeit des Schaltfingers 71 bis zur Position der Schaltkulisse 76 vermieden. Damit und durch die oben beschriebene Verbindung eines Sonnenrads 56 über einen Freilauf 59 mit dem Gehäuse 14 ist sichergestellt, dass für keinen der Gangwechsel ein Leerweg der Tretkurbeln 8 ohne Leistungsübertragung entsteht. Es findet bei jedem Gangwechsel eine Leistungsübertragung vom Fahrer auf das Kettenblatt 4 bzw. Hinterrad 9-2 und damit zugkraftunterbrechungsfrei statt.

Figur 3A zeigt ein Ausführungsbeispiel, bei dem die Mitnehmerelemente 61 mit oder als Reibelemente 64-1, zum Beispiel in Form einer Bremsscheibe 65, ausgebildet sind und diese reibschlüssig mit Bremselementen 66 und insbesondere Bremszangen 67 einer übergeordneten Bremseinheit 60 oder durch Kupplungen in ihrer Drehbewegung blockiert bzw. drehfest mit dem Gehäuse 14 verbunden und wieder freigegeben werden können. Durch ein reibschlüssiges Blockieren und Freigeben können die Übergänge zwischen den Gängen bzw. zwischen den Übersetzungen bzw. der Schaltvorgang kontinuierlich wie ein CVT (continuously variable transmission), z.B. ein Kugelreibringgetriebe, gestaltet werden.

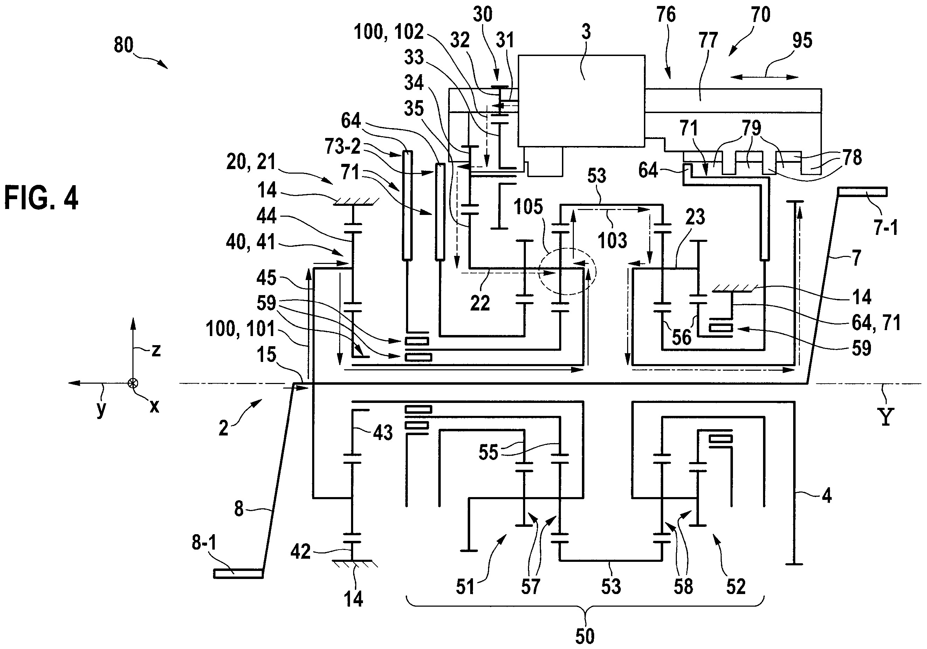

Figur 4 illustriert den Leistungsfluss 100 durch die Antriebsanordnung 80 oder Antriebseinheit, der für alle schaltbaren Gänge in gleicher Weise und insbesondere in immer gleicher Richtung stattfindet.

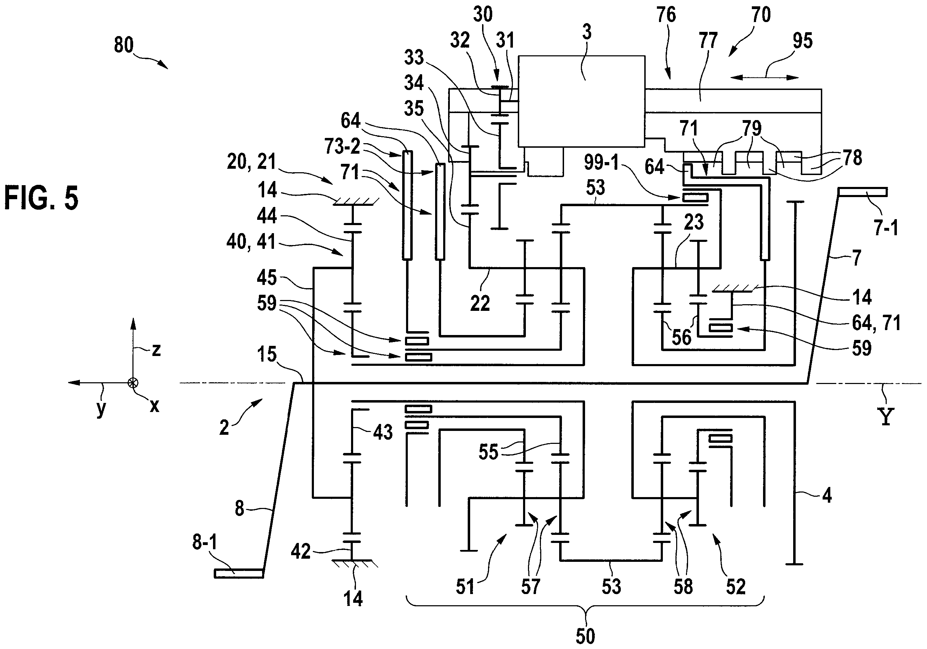

Figur 5 zeigt eine bevorzugte Realisierung der erfindungsgemäßen Antriebsanordnung 80 mit insgesamt sieben Gängen. Ein weiterer und über die Anzahl sechs hinausgehender Gang bzw. eine weitere Übersetzung entstehen, indem ein aktiv geschalteter, schaltbarer oder schaltender Freilauf 99-1 oder eine entsprechende Kupplung am gemeinsamen Hohlrad 53 bzw. zwischen dem gemeinsamen Hohlrad 53 und dem Planetensteg 23 auf der Abtriebsseite angebracht wird. Dadurch können Planetensteg 23 und Hohlrad 53 wahlweise miteinander verbunden werden und somit kann für das Schaltgetriebe 50 insgesamt die zusätzliche Übersetzung 1:1 generiert werden.

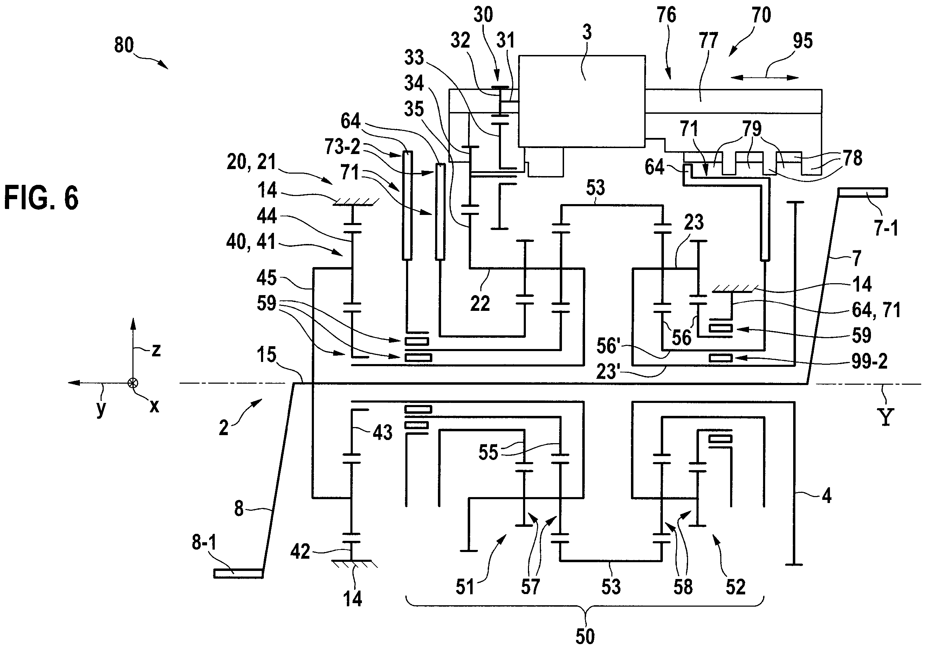

Alternativ kann - wie dies in Figur 6 dargestellt ist - auch ein aktiv geschalteter Freilauf 90-2 oder Kupplung zwischen Planetenstegwelle 23' des abtriebsseitigen Planetenstegs 23 und Sonnenradwelle 56' des abtriebsseitigen Sonnenrads 56 zur wahlweisen Verbindung von Planetenstegwelle 23' und Sonnenradwelle 56' angebracht werden. In beiden Fällen entsteht ein integriertes lastschaltbares 7-Gang-Planetenschaltgetriebe ohne Leistungsflussumkehr durch einen Schaltvorgang.

Figur 2A zeigt den Aufbau eines erfindungsgemäß betreibbaren Pedelec- oder eBike-Tretlagerantriebs 80 mit integriertem lastschaltfähigen 6-Gang-Planetenschaltgetriebe mit drei Schaltfingern 71 und einer Stelleinheit 70 in Form einer Schaltkulisse 76.

Figur 3A zeigt ein Ausführungsbeispiel einer erfindungsgemäßen Antriebsanordnung 80 mit drei Bremsen 60 oder Kupplungen.

Figur 4 illustriert den Fluss 100 des Drehmoments bzw. der Leistung, und zwar anhand der in Figur 2A gezeigten Ausführungsform und mit dem Fluss 101 für die muskuläre Leistung oder für das muskuläre Moment und dem Fluss 102 für die Motorleistung bzw. das Motormoment, welche sich am Vereinigungspunkt oder Vereinigungsbereich 105 zum Fluss 103 der Gesamtleistung und des Gesamtmoments vereinigen, welche zum Abtriebselement 4 geführt werden.

Figur 5 zeigt in Bezug auf die in Figur 2 gezeigte Ausführungsform der vorliegenden Erfindung die Realisierung von sieben Gängen durch einen aktiv geschalteten Freilauf 99-1 oder eine aktiv geschaltete oder schaltbare Kupplung am gemeinsamen Hohlrad 53 zur Verbindung oder Kopplung von Planetensteg oder Planetenträger 23 und Hohlrad 53.

Figur 6 zeigt in Bezug auf die in Figur 2 gezeigte Ausführungsform der erfindungsgemäßen Antriebsanordnung 80 ein Ausführungsbeispiel mit sieben Gängen, die unter anderem durch einen aktiv geschalteten oder schaltbaren Freilauf 99-2 oder eine aktiv geschaltete oder schaltbare Kupplung zwischen Planetenstegwelle 23' des Planetensteg 23 und Sonnenradwelle 56' des Sonnenrad 56 zur Verbindung oder Kopplung von Planetenstegwelle 23' und Sonnenradwelle 56' realisiert werden.

Beim herkömmlichen Betrieb, d.h. unter Verwendung so genannter Direktgänge, wie sie in den Ausführungsformen gemäß den Figuren 2B und 3B im Zusammenhang mit den Bezugszeichen V und VI dargestellt sind, ergibt sich für die Realisierung eines 7-Gang-Planetenschaltgetriebes folgende Schalttabelle:

| Gang | I - 2.2 | II - 2.1 | III - 1.1 | IV - 1.2 | V | VI |
|---|---|---|---|---|---|---|
| 1 | frei | frei | frei | frei | blockiert | - |
| 2 | blockiert | frei | frei | frei | frei | - |
| 3 | blockiert | blockiert | frei | frei | frei | - |
| 4 | blockiert | frei | blockiert | frei | frei | - |
| 5 | blockiert | blockiert | blockiert | frei | frei | - |
| 6 | blockiert | frei | blockiert | blockiert | frei | - |
| 7 | blockiert | blockiert | blockiert | blockiert | frei | - |

Beim erfindungsgemäßen Betriebsverfahren werden die Direktgänge jedoch obsolet und können, selbst wenn sie strukturell vorhanden sind, durch ein entsprechendes Betriebsschema gemäß der nachfolgenden Schalttabelle umgangen werden.

| Gang | I - 2.2 | II - 2.1 | III - 1.1 | IV - 1.2 | V | VI |
|---|---|---|---|---|---|---|
| 1 | fest | frei | frei | frei | - | frei |
| 2 | fest | blockiert | frei | Frei | - | frei |
| 3 | fest | frei | blockiert | Frei | - | frei |
| 4 | fest | blockiert | blockiert | Frei | - | frei |
| 5 | fest | frei | blockiert | blockiert | - | frei |
| 6 | fest | blockiert | blockiert | blockiert | - | frei |
| 7 | fest | frei | frei | frei | - | blockiert |

## Patentansprüche

1. Betriebsverfahren für eine Antriebsanordnung (80) für ein mit Muskelkraft und/oder - insbesondere zusätzlich - mit Motorkraft antreibbares Fahrzeug (1), ein Elektrofahrrad, eBike oder Pedelec,
- wobei die Antriebsanordnung (80) ausgebildet ist mit:
- einer um eine Drehachse (Y) drehbaren Kurbelwelle (15) zum Aufnehmen eines ersten und insbesondere mit Muskelkraft erzeugten Drehmomentes und
- einer Übertragungseinrichtung (20), welche zum Übertragen des ersten Drehmomentes von der Kurbelwelle (15) an ein mit einem Antriebsrad (9-2) des Fahrzeuges (1) koppelbares Abtriebselement (4) und mittels eines - insbesondere automatisch - schaltbaren mehrstufigen Planetengetriebes (21) zu einer variablen Übersetzung ausgebildet ist, und
- wobei bei dem Betriebsverfahren:
- eine jeweilige Übersetzung des Planetengetriebes (21) über eine Gangwahl oder einen Gangwechsel und durch gesteuertes Feststellen und/oder Freigeben jeweiliger Sonnenräder (55, 56) und/oder den Sonnenrädern (55, 56) entsprechender Planetenstufen (57, 58) eingestellt wird und
- für jede Übersetzung und für jeden Gang der Antriebsanordnung (80) immer mindestens eines der Sonnenräder (55, 56) und/oder immer mindestens eine der den Sonnenrädern (55, 56) entsprechenden Planetenstufen (57, 58) festgestellt ist oder wird,
- ein gesteuertes Feststellen und Freigeben eines jeweiligen Sonnenrads (55, 56) und/oder einer dem jeweiligen Sonnenrad (55, 56) entsprechenden Planetenstufe (57, 58) über ein Feststellen bzw. Freigeben eines mit einem jeweiligen Sonnenrad (55, 56) drehfest gekoppelten Mitnehmerelements (64) erfolgt,
**dadurch gekennzeichnet, dass** genau ein vorbestimmtes Sonnenrad (55, 56) und/oder die diesem Sonnenrad (55, 56) entsprechende Planetenstufe (57, 58) permanent festgestellt ist oder wird.

2. Betriebsverfahren nach Anspruch 1, bei welchem ein jeweiliges Mitnehmerelement (64) als oder mit Reibelement (64-1) über einen steuerbaren Reibschluss mit einem Bremselement (66) zum Feststellen steuerbar abgebremst und arretiert und zum Freigeben von einem Reibschluss gelöst wird.

3. Betriebsverfahren nach Anspruch 1 oder 2, bei welchem ein jeweiliges Mitnehmerelement (64) - insbesondere als Schaltfinger (71) und/oder über einen mechanisch schaltenden Freilauf (59) - über einen Stellantrieb (70), z.B. in Form einer Schaltkulisse (76) - zum Feststellen steuerbar blockiert und zum Freigeben von einer Blockade gelöst wird.

4. Betriebsverfahren nach einem der vorangehenden Ansprüche, bei welchem genau das vorbestimmte Sonnenrad (55, 56) und/oder die diesem Sonnenrad (55, 56) entsprechende Planetenstufe (57, 58) unter Zwischenschaltung eines mechanisch selbstschaltenden Freilaufs (59) permanent festgestellt ist oder wird.

5. Betriebsverfahren nach Anspruch 4, bei welchem das permanente Feststellen des genau einen vorbestimmten Sonnenrads (55, 56) und/oder der diesem Sonnenrad (55, 56) entsprechenden Planetenstufe (57, 58) - insbesondere unter Zwischenschaltung eines mechanisch selbstschaltenden Freilaufs (59) - durch permanentes Feststellen des jeweiligen Mitnehmerelements (64) erfolgt.

6. Betriebsverfahren nach Anspruch 5, bei welchem das permanente Feststellen des jeweiligen Mitnehmerelements (64) durch mechanisches Fixieren an einem äußeren und nicht mitdrehbaren Gehäuse (14) erfolgt.

7. Antriebsanordnung (80) für ein mit Muskelkraft und/oder - insbesondere zusätzlich - mit Motorkraft antreibbares Fahrzeug (1), ein Elektrofahrrad, eBike oder Pedelec, welche zur Verwendung in einem Betriebsverfahren nach einem der Ansprüche 1 bis 7 eingerichtet und ausgebildet ist mit:
- einer um eine Drehachse (Y) drehbaren Kurbelwelle (15) zum Aufnehmen eines ersten und insbesondere mit Muskelkraft erzeugten Drehmomentes und
- einer Übertragungseinrichtung (20), welche zum Übertragen des ersten Drehmomentes von der Kurbelwelle (15) an ein mit einem Antriebsrad (9-2) des Fahrzeuges (1) koppelbares Abtriebselement (4) und mittels eines - insbesondere automatisch - schaltbaren mehrstufigen Planetengetriebes (21) zu einer variablen Übersetzung ausgebildet ist,
wobei:
- die Übersetzung des Planetengetriebes (21) über einen Gangwechsel und durch gesteuertes Verbinden und/oder Freigeben jeweiliger Sonnenräder (55, 56) und/oder jeweiliger Sonnenräder (55, 56) entsprechender Planetenstufen (57, 58) über ein mit dem jeweiligen Sonnenrad (55, 56) drehfest gekoppeltes Mitnehmerelement (64) einstellbar ist und
- eine jeweiliges Mitnehmerelement (64) insbesondere
- als ein oder mit einem Reibelement (64-1) und über einen steuerbaren Reibschluss mit einem Bremselement (66) zum Feststellen steuerbar abbremsbar und arretierbar und zum Freigeben von einem Reibschluss lösbar ausgebildet ist und/oder
- über einen Stellantrieb (70) - z.B. in Form einer Schaltkulisse (76) -zum Feststellen steuerbar blockierbar und zum Freigeben von einer Blockade lösbar ausgebildet ist, insbesondere als ein oder mit einem Schaltfinger (71) und/oder über einen dazwischen ausgebildeten mechanisch schaltenden Freilauf (59),
**dadurch gekennzeichnet, dass** genau ein vorbestimmtes Sonnenrad (55, 56) und/oder die diesem Sonnenrad (55, 56) entsprechende Planetenstufe (57, 58) permanent festgestellt ist durch mechanisches Fixieren an einem äußeren und nicht mitdrehbaren Gehäuse (14).

8. Antriebsanordnung (80) nach Anspruch 7, bei welcher das genau eine vorbestimmte Sonnenrad (55, 56) und/oder die diesem Sonnenrad (55, 56) entsprechende Planetenstufe (57, 58) permanent festgestellt ist unter Zwischenschaltung eines mechanisch selbstschaltenden Freilaufs (59), durch mechanisches Fixieren - vorzugsweise eines entsprechenden Mitnehmerelements (64) - an einem äußeren und nicht mitdrehbaren Gehäuse (14).

9. Antriebsanordnung (80) nach Anspruch 7 oder 8, bei welcher
- die Übertragungseinrichtung (20) zwei über ein gemeinsames Hohlrad (53) gekoppelte Planetengetriebe (51, 52) aufweist und
- ein Planetenträger (23) des einen und insbesondere abtriebsseitigen Planetengetriebes (52) über einen aktiv schaltbaren Freilauf (79-1) oder eine aktiv schaltbare Kupplung mit dem gemeinsamen Hohlrad (53) steuerbar koppelbar ausgebildet ist.

10. Antriebsanordnung (80) nach einem der Ansprüche 7 bis 9, bei welcher
- die Übertragungseinrichtung (20) zwei über ein gemeinsames Hohlrad (53) gekoppelte Planetengetriebe (51, 52) aufweist und
- ein Planetenträger (23) des einen und insbesondere abtriebsseitigen Planetengetriebes (52) über einen aktiv schaltbaren Freilauf (79-2) oder eine aktiv schaltbare Kupplung mit einem Sonnenrad (56, 56-1) des Planetengetriebes (52) steuerbar koppelbar ausgebildet ist, insbesondere über eine steuerbare Kopplung zwischen Planetenträgerwelle und Sonnenradwelle.

11. Mit Muskelkraft und/oder - insbesondere zusätzlich - mit Motorkraft antreibbares Fahrzeug (1), Elektrofahrrad, eBike oder Pedelec, mit:
- mindestens einem Rad (9-1, 9-2) und
- einer Antriebsanordnung (80) nach einem der Ansprüche 7 bis 10 zum Antreiben des mindestens einen Rades (9-1, 9-2).

## Claims

1. Operating method for a drive arrangement (80) for a vehicle (1), an electric bicycle, ebike or pedelec which can be driven by muscle power and/or (in particular, additionally) by motor power,
- wherein the drive arrangement (80) is configured with:
- a crankshaft (15) which can be rotated about a rotational axis (Y) for receiving a first torque which is generated, in particular, by muscle power,
and
- a transmission device (20) which is configured to transmit the first torque from the crankshaft (15) to an output element (4) which can be coupled to a drive wheel (9-2) of the vehicle (1) and by means of an (in particular, automatically) shiftable multiple-stage planetary transmission (21) for a variable transmission ratio,
- wherein, in the case of the operating method:
- a respective transmission ratio of the planetary transmission (21) is set via a gear selection or a gear change and by way of controlled fixing and/or releasing of respective sun gears (55, 56) and/or the sun gears (55, 56) of corresponding planetary stages (57, 58), and,
- for each transmission ratio and for each gear of the drive arrangement (80), at least one of the sun gears (55, 56) is always fixed and/or at least one of the planetary stages (57, 58) which correspond to the sun gears (55, 56) is always fixed,
- controlled fixing and releasing of a respective sun gear (55, 56) and/or a planetary stage (57, 58) which corresponds to the respective sun gear (55, 56) takes place via fixing and releasing, respectively, of a driver element (64) which is coupled fixedly to a respective sun gear (55, 56) for conjoint rotation,
**characterized in that** precisely one predetermined sun gear (55, 56) and/or the planetary stage (57, 58) which corresponds to this sun gear (55, 56) are/is fixed permanently.

2. Operating method according to Claim 1, in the case of which a respective driver element (64) is braked and locked as or by way of a friction element (64-1) via a controllable frictionally locking connection to a brake element (66) for fixing, and is disconnected from a frictionally locking connection for releasing.

3. Operating method according to Claim 1 or 2, in the case of which a respective driver element (64) (in particular, as a selector finger (71) and/or via a mechanically switching freewheel (59)) is blocked controllably (via an actuating drive (70), for example in the form of a shift guide plate (76)) for fixing and is disconnected for releasing from a blocked state.

4. Operating method according to one of the preceding claims, in the case of which precisely the predetermined sun gear (55, 56) and/or the planetary stage (57, 58) which corresponds to this sun gear (55, 56) are/is fixed permanently with a mechanically self-switching freewheel (59) connected in between.

5. Operating method according to Claim 4, in the case of which the permanent fixing of the precisely one predetermined sun gear (55, 56) and/or the planetary stage (57, 58) which corresponds to this sun gear (55, 56) takes place by way of permanent fixing of the respective driver element (64), in particular with a mechanically self-switching freewheel (59) connected in between.

6. Operating method according to Claim 5, in the case of which the permanent fixing of the respective driver element (64) takes place by way of mechanical fastening to an outer housing (14) which cannot be rotated with it.

7. Drive arrangement (80) for a vehicle (1), an electric bicycle, ebike or pedelec which can be driven by muscle power and/or (in particular, additionally) by motor power, which drive arrangement (80) is designed for use in an operating method as claimed in one of claims 1 to 7 and is configured with:
- a crankshaft (15) which can be rotated about a rotational axis (Y) for receiving a first torque which is generated, in particular, by muscle power,
and
- a transmission device (20) which is configured to transmit the first torque from the crankshaft (15) to an output element (4) which can be coupled to a drive wheel (9-2) of the vehicle (1) and by means of an (in particular, automatically) shiftable multiple-stage planetary transmission (21) for a variable transmission ratio,
wherein:
- the transmission ratio of the planetary transmission (21) can be set via a gear selection or a gear change and by way of controlled fixing and/or releasing of respective sun gears (55, 56) and/or respective sun gears (55, 56) of corresponding planetary stages (57, 58) via a driver element (64) which is coupled fixedly to the respective sun gear (55, 56) for conjoint rotation, and
- a respective driver element (64) is configured, in particular,
- such that it can be braked and locked controllably as or by way of a friction element (64-1) and via a controllable frictionally locking connection to a brake element (66) for fixing, and such that it can be disconnected from a frictionally locking connection for releasing, and/or
- is configured such that it can be blocked controllably via an actuating drive (70) (for example, in the form of a shift guide plate (76)) for fixing and such that it can be disconnected from a blockage for releasing, in particular as or by way of a selector finger (71) and/or via a mechanically switching freewheel (59) which is configured in between,
**characterized in that** precisely one predetermined sun gear (55, 56) and/or the planetary stage (57, 58) which corresponds to this sun gear (55, 56) are/is fixed permanently by way of mechanical fastening to an outer housing (14) which cannot be rotated with them/it.

8. Drive arrangement (80) according to Claim 7, in the case of which the precisely one predetermined sun gear (55, 56) and/or the planetary stage (57, 58) which corresponds to this sun gear (55, 56) are/is fixed permanently, with a mechanically self-switching freewheel (59) connected in between, by way of mechanical fastening (preferably of a corresponding driver element (64)) to an outer housing (14) which cannot be rotated with them/it.

9. Drive arrangement (80) according to Claim 7 or 8, in the case of which
- the transmission device (20) has two planetary transmissions (51, 52) which are coupled via a common ring gear (53), and
- a planetary carrier (23) of the one and, in particular, output-side planetary transmission (52) is configured such that it can be coupled controllably to the common ring gear (53) via an actively switchable freewheel (79-1) or an actively switchable clutch.

10. Drive arrangement (80) according to one of Claims 7 to 9, in the case of which
- the transmission device (20) has two planetary transmissions (51, 52) which are coupled via a common ring gear (53), and
- a planetary carrier (23) of the one and, in particular, output-side planetary transmission (52) is configured such that it can be coupled controllably to a sun gear (56, 56-1) of the planetary transmission (52) via an actively switchable freewheel (79-2) or an actively switchable clutch, in particular via controllable coupling between a planetary carrier shaft and a sun gear shaft.

11. Vehicle (1), electric bicycle, ebike or pedelec which can be driven by muscle power and/or (in particular, additionally) by motor power, with:
- at least one wheel (9-1, 9-2), and
- a drive arrangement (80) according to one of Claims 7 to 10 for driving the at least one wheel (9-1, 9-2).

## Revendications

1. Procédé d'exploitation d'un agencement d'entraînement (80) pour un véhicule (1) pouvant être entraîné par la force musculaire et/ou - notamment en plus - par la force motrice, un vélo électrique, un e-bike ou un vélo à assistance électrique,
- l'agencement d'entraînement (80) étant réalisé avec :
- un vilebrequin (15) rotatif autour d'un axe de rotation (Y) pour absorber un premier couple et notamment un couple généré par la force musculaire
et
- un dispositif de transmission (20) qui est réalisé pour transmettre le premier couple du vilebrequin (15) à un élément de sortie (4) pouvant être couplé à une roue d'entraînement (9-2) du véhicule (1) et pour obtenir un rapport de transmission variable au moyen d'un engrenage planétaire (21) à plusieurs étages commutable - notamment automatiquement -, et
- dans le procédé d'exploitation :
- un rapport de transmission respectif de l'engrenage planétaire (21) étant réglé par l'intermédiaire d'une sélection de vitesse ou d'un changement de vitesse et par une immobilisation et/ou une libération commandées de roues solaires respectives (55, 56) et/ou d'étages planétaires (57, 58) correspondant aux roues solaires (55, 56) et
- pour chaque rapport de transmission et pour chaque vitesse de l'agencement d'entraînement (80), toujours au moins l'une des roues solaires (55, 56) et/ou toujours au moins l'un des étages planétaires (57, 58) correspondant aux roues solaires (55, 56) étant immobilisé,
- une immobilisation et une libération commandées d'une roue solaire respective (55, 56) et/ou d'un étage planétaire (57, 58) correspondant à la roue solaire respective (55, 56) s'effectuant par l'intermédiaire d'une immobilisation ou d'une libération d'un élément entraîneur (64) couplé de manière solidaire en rotation à une roue solaire respective (55, 56),
**caractérisé en ce qu'**exactement une roue solaire prédéterminée (55, 56) et/ou l'étage planétaire (57, 58) correspondant à cette roue solaire (55, 56) est ou sera immobilisé en permanence.

2. Procédé d'exploitation selon la revendication 1, dans lequel un élément entraîneur respectif (64), sous forme d'élément de friction (64-1) ou avec un tel élément, est freiné et arrêté de manière commandable par l'intermédiaire d'un engagement par friction commandable avec un élément de freinage (66) pour l'immobilisation et est dégagé d'un engagement par friction pour la libération.

3. Procédé d'exploitation selon la revendication 1 ou 2, dans lequel un élément entraîneur respectif (64) - notamment sous forme de doigt de commutation (71) et/ou par l'intermédiaire d'une roue libre (59) à commutation mécanique - est bloqué de manière commandable par l'intermédiaire d'un actionneur (70), p. ex. sous la forme d'une coulisse de commutation (76) - pour l'immobilisation et est dégagé d'un blocage pour la libération.

4. Procédé d'exploitation selon l'une quelconque des revendications précédentes, dans lequel exactement la roue solaire (55, 56) prédéterminée et/ou l'étage planétaire (57, 58) correspondant à cette roue solaire (55, 56) est ou sera immobilisé en permanence avec interposition d'une roue libre (59) à commutation mécanique automatique.

5. Procédé d'exploitation selon la revendication 4, dans lequel l'immobilisation permanente de l'exactement une roue solaire (55, 56) prédéterminée et/ou de l'étage planétaire (57, 58) correspondant à cette roue solaire (55, 56) - notamment avec interposition d'une roue libre (59) à commutation mécanique automatique - s'effectue par immobilisation permanente de l'élément entraîneur (64) respectif.

6. Procédé d'exploitation selon la revendication 5, dans lequel l'immobilisation permanente de l'élément entraîneur (64) respectif s'effectue par fixation mécanique sur un boîtier (14) extérieur et non rotatif.

7. Agencement d'entraînement (80) pour un véhicule (1) pouvant être entraîné par la force musculaire et/ou - notamment en plus - par la force motrice, un vélo électrique, un e-bike ou un vélo à assistance électrique, qui est conçu et réalisé pour être utilisé dans un procédé d'exploitation selon l'une quelconque des revendications 1 à 7, avec :
- un vilebrequin (15) rotatif autour d'un axe de rotation (Y) pour absorber un premier couple et notamment un couple généré par la force musculaire
et
- un dispositif de transmission (20) qui est réalisé pour transmettre le premier couple du vilebrequin (15) à un élément de sortie (4) pouvant être couplé à une roue d'entraînement (9-2) du véhicule (1) et pour obtenir un rapport de transmission variable au moyen d'un engrenage planétaire (21) à plusieurs étages commutable - notamment automatiquement -,
- le rapport de transmission de l'engrenage planétaire (21) étant réglable par l'intermédiaire d'un changement de vitesse et par une liaison et/ou une libération commandées de roues solaires respectives (55, 56) et/ou d'étages planétaires (57, 58) correspondant à des roues solaires respectives (55, 56) par l'intermédiaire d'un élément entraîneur (64) couplé de manière solidaire en rotation à la roue solaire respective (55, 56) et
- un élément entraîneur respectif (64), notamment
- étant réalisé sous la forme d'un élément de friction (64-1) ou avec un tel élément et de manière à pouvoir être freiné et arrêté de manière commandable par l'intermédiaire d'un engagement par friction commandable avec un élément de freinage (66) pour l'immobilisation et de manière à pouvoir être dégagé d'un engagement par friction pour la libération et/ou
- étant réalisé de manière à pouvoir être bloqué de manière commandable par l'intermédiaire d'un actionneur (70) - p. ex. sous la forme d'une coulisse de commutation (76) - pour l'immobilisation et à pouvoir être dégagé d'un blocage pour la libération, notamment sous la forme d'un doigt de commutation (71) ou avec un tel doigt et/ou par l'intermédiaire d'une roue libre (59) à commutation mécanique réalisée entre les deux,
**caractérisé en ce qu'**exactement une roue solaire (55, 56) prédéterminée et/ou l'étage planétaire (57, 58) correspondant à cette roue solaire (55, 56) est immobilisé en permanence par fixation mécanique sur un boîtier (14) extérieur et non rotatif.

8. Agencement d'entraînement (80) selon la revendication 7, dans lequel l'exactement une roue solaire (55, 56) prédéterminée et/ou l'étage planétaire (57, 58) correspondant à cette roue solaire (55, 56) est immobilisé en permanence avec interposition d'une roue libre (59) à commutation mécanique automatique, par fixation mécanique - de préférence d'un élément entraîneur (64) correspondant - sur un boîtier (14) extérieur et non rotatif.

9. Agencement d'entraînement (80) selon la revendication 7 ou 8, dans lequel
- le dispositif de transmission (20) présente deux engrenages planétaires (51, 52) couplés par l'intermédiaire d'une couronne commune (53) et
- un porte-satellites (23) de l'un des engrenages planétaires (52) et notamment du côté de la sortie, est réalisé de manière à pouvoir être couplé de manière commandable à la couronne commune (53) par l'intermédiaire d'une roue libre (79-1) à commutation active ou d'un accouplement à commutation active.

10. Agencement d'entraînement (80) selon l'une quelconque des revendications 7 à 9, dans lequel
- le dispositif de transmission (20) présente deux engrenages planétaires (51, 52) couplés par l'intermédiaire d'une couronne commune (53) et
- un porte-satellites (23) de l'un des engrenages planétaires (52) et notamment du côté de la sortie, est réalisé de manière à pouvoir être couplé de manière commandable à une roue solaire (56, 56-1) de l'engrenage planétaire (52) par l'intermédiaire d'une roue libre (79-2) à commutation active ou d'un accouplement à commutation active, notamment par l'intermédiaire d'un accouplement commandable entre l'arbre du porte-satellites et l'arbre de la roue solaire.

11. Véhicule (1) pouvant être entraîné par la force musculaire et/ou - notamment en plus - par la force motrice, vélo électrique, e-bike ou vélo à assistance électrique, avec :
- au moins une roue (9-1, 9-2), et
- un agencement d'entraînement (80) selon l'une quelconque des revendications 7 à 10 pour entraîner l'au moins une roue (9-1, 9-2).
